# EUROPÄISCHE PATENTSCHRIFT

(11) **EP 2 251 298 B1**
(45) Veröffentlichungstag und Bekanntmachung des Hinweises auf die Patenterteilung: **06.11.2013**
(21) Anmeldenummer: 10004730.7
(22) Anmeldetag: 05.05.2010
(51) Int. Cl.: B66F 9/075, B66F 9/18, B62B 3/06, B66F 9/08

(54) **Flurförderzeug mit einem Paar von Radarmen**
Industrial truck with a pair of wheel arms
Chariot de manutention doté d'une paire de bras de roue

(30) Priorität: 12.05.2009 DE 102009020947
(43) Veröffentlichungstag der Anmeldung: 17.11.2010
(73) Patentinhaber: Jungheinrich Aktiengesellschaft, 22047 Hamburg (DE)
(72) Erfinder: Rath, Olaf, 24558 Henstedt-Ulzburg (DE); Schüler, Michael, 23923 Schönberg (DE); Walter, Olaf, 24558 Wakendorf (DE)
(74) Vertreter: Hauck Patent- und Rechtsanwälte

(56) Entgegenhaltungen:
- EP-A1- 1 932 799
- DE-A1- 1 431 709
- GB-A- 2 250 267

## Beschreibung

Die vorliegende Erfindung betrifft ein Flurförderzeug mit einem Paar von Radarmen zum Aufnehmen einer ersten Last und mit einem Hubgerüst, an dem ein Lastschlitten verfahrbar angeordnet ist, wobei das Hubgerüst über einen Lastrahmen mit einem Fahrzeugkörper verbunden ist.

Ein Flurförderzeug gemäß dem Oberbegriff des Anspruchs 1 ist bekannt vom DE 1 431 709.

Bei sogenannten Doppelstockstaplern, dies können beispielsweise Elektro-Deichselhubwagen/-stapler sein, ist es möglich, zwei Euro-Paletten gleichzeitig aufzunehmen. Dies ermöglicht eine Kombination von Nieder- und Hochhubgeräten, die beispielsweise zum Be- und Entladen von Lastkraftwagen und Regalen eingesetzt werden können.

Bei dem Doppelstockbetrieb eines Flurförderzeugs, insbesondere bei Transport von Paletten, tritt immer wieder das Problem auf, die übereinander angeordneten Paletten relativ zueinander auszurichten, sodass diese ohne zusätzliches Rangieren des Fahrzeugs übereinander abgesetzt werden können.

Aus dem Stand der Technik ist es bekannt, an dem Fahrzeugkörper einen Palettenanschlag in Form einer Anschlagplatte vorzusehen, die über eine Ausnehmung im Lastschlitten mittig in einen Bereich zwischen den Radarmen vorsteht. Der Nachteil eines mittigen Palettenanschlags liegt darin, dass hierfür eine Ausnehmung in der Frontplatte des Lastschlittens vorgesehen werden muss, wodurch dieser an Festigkeit verliert. Auch stellt ein solcher mittig angeordneter Palettenanschlag nicht sicher, dass eine auf die Radarme aufgenommene Palette nicht seitlich verdreht aufgenommen wird.

Der Erfindung liegt die Aufgabe zugrunde, für ein Flurförderzeug beim Doppelstockbetrieb sicherzustellen, dass aufgenommene Paletten relativ zueinander korrekt ausgerichtet sind.

Erfindungsgemäß wird die Aufgabe durch ein Flurförderzeug mit den Merkmalen aus Anspruch 1 gelöst. Vorteilhafte Ausgestaltungen bilden den Gegenstand der Unteransprüche.

Das erfindungsgemäße Flurförderzeug besitzt ein Paar von Radarmen zur Aufnahme der ersten Last. Ferner ist das Flurförderzeug für den Hochhubbetrieb mit einem Hubgerüst ausgestattet, an dem ein Lastschlitten verfahrbar angeordnet ist. Das Hubgerüst ist über einen Lastrahmen mit einem Fahrzeugkörper verbunden. Erfindungsgemäß besitzt der Lastrahmen zwei Anschläge für eine auf die Radarme aufgenommene Last. Die Anschläge sind jeweils auf einer Seite des Lastschlittens an dem Lastrahmen angeordnet und stehen von dem Lastrahmen in Richtung der Radarme vor. Die Anschläge bilden eine seitliche Begrenzung für auf den Radarmen aufgenommene Last. Die erfindungsgemäß vorgesehenen Anschläge dienen dazu, dass eine auf die Radarme für den Niederhubbetrieb aufgenommene Last an diesen anschlägt und sich somit auf den Radarmen ausrichtet. Die beiden Anschläge erfüllen damit die Aufgabe eines Palettenanschlags, über den die Ausrichtung einer aufgenommenen Palette auf den Radarmen korrigiert wird, um die Palette in eine durch die Anschläge definierte Position zu bringen.

Ein besonderer Vorteil der erfindungsgemäßen Anschläge liegt darin, dass diese seitlich des Lastschlittens angeordnet sind. Es besteht so nicht die Notwendigkeit, durch eine Ausnehmung in dem Lastschlitten dessen Stabilität zu schwächen.

In einer bevorzugten Ausgestaltung besitzen die Anschläge einen vorbestimmten Abstand zueinander, der bevorzugt der Breite einer Euro-Palette entspricht. Die Anschläge sind symmetrisch zu den Radarmen angeordnet, sodass jeder Anschlag einen gleichen Abstand zu dem benachbarten Radarm aufweist. Die angeordneten Anschläge stellen sicher, dass die aufzunehmende Palette mittig auf die Radarme aufgenommen und senkrecht zu den Radarmen ausgerichtet wird.

In einer bevorzugten Ausgestaltung besitzen die Anschläge jeweils eine Anschlagfläche, die einen spitzen Winkel mit einer Längsachse des Gabelarms einschließt. Die so angeordneten Anschlagflächen richten eine schief aufgenommene Palette automatisch auf den Radarmen aus, in dem eine oder beide Ecken der Palette entlang der Anschlagfläche verschoben werden, bis die Palette mit beiden Ecken an den Anschlägen anliegt.

In einer besonders bevorzugten Ausgestaltung weist der Lastrahmen Seitenwände auf, die das Hubgerüst in einem unteren Bereich jeweils seitlich überdecken und deren zu den Radarmen weisendes Ende jeweils einen der Anschläge trägt. Ein besonderer Vorteil des so ausgebildeten Lastrahmens liegt darin, dass dieser seitlich das Hubgerüst überdeckt und somit einen wirksamen Schutz für das Hubgerüst darstellt. Das hinter dem Lastrahmen angeordnete Hubgerüst kann so vor Stößen und Beschädigungen bei Arbeiten in dem Niederhubbereich geschützt werden. Darüber hinaus besitzt die Anordnung der Anschläge an dem Lastrahmen den Vorteil, dass diese sich leichter montieren lassen. Bevorzugt sind die Anschläge nicht als separate Teile ausgebildet, sondern einstückig mit dem Lastrahmen geformt. Hierdurch besteht zusätzlich die Erleichterung, dass die Anschläge nicht als separate Bauteile montiert werden müssen, sondern als Bestandteil des Lastrahmens direkt an dem Flurförderzeug ausgeformt sind.

In einer bevorzugten Ausgestaltung bildet eine zu den Lastarmen weisende Frontplatte des Lastschlittens eine weitere Anschlagfläche für eine aufzunehmende Last. Die Frontplatte bildet somit eine definierte Anschlagfläche für den Hochhubbetrieb. Bevorzugt stehen die seitlich des Lastschlittens angeordneten Anschläge für den Niederhubbetrieb um einen vorbestimmten Abstand gegenüber der Frontplatte zurück. Hierbei stehen die seitlich des Lastschlittens angeordneten Anschläge gegenüber der Frontplatte in Richtung vom Fahrzeugkörper weg zu den Lastarmen hin vor. Auf diese Weise kann sichergestellt werden, dass, wenn eine Palette für den Hochhubbetrieb in niedriger Höhe aufgenommen wird, diese an der Frontplatte ausgerichtet wird und sich nicht an den Anschlägen der seitlich angeordneten Anschläge ausrichtet. Der Abstand, um den die Frontplatte gegenüber den seitlichen Anschlägen vorgesetzt ist, kann hierbei 0,5 bis 3 cm betragen.

In einer bevorzugten Ausgestaltung weisen die Lastarme ein U-Profil auf, in das in abgesenktem Zustand des Lastschlittens die Radarme mindestens teilweise eintauchen.

Ein bevorzugtes Ausführungsbeispiel wird nachfolgend anhand eines Elektro-Deichselhubwagens/-staplers näher erläutert.

Es zeigt:
- Fig. 1: das erfindungsgemäße Flurförderzeug mit gesenktem Lastschlitten in einer Ansicht von der Seite,
- Fig. 1b: eine schematische Detailansicht der Anschläge,
- Fig. 2: das Flurförderzeug aus Figur 1 mit einer perspektivischen Ansicht von schräg vorne,
- Fig. 3: das Flurförderzeug gemäß Figur 1 mit einem Doppelstockbetrieb mit zwei Paletten und
- Fig. 4: eine perspektivische Ansicht des Flurförderzeugs aus Fig. 3.

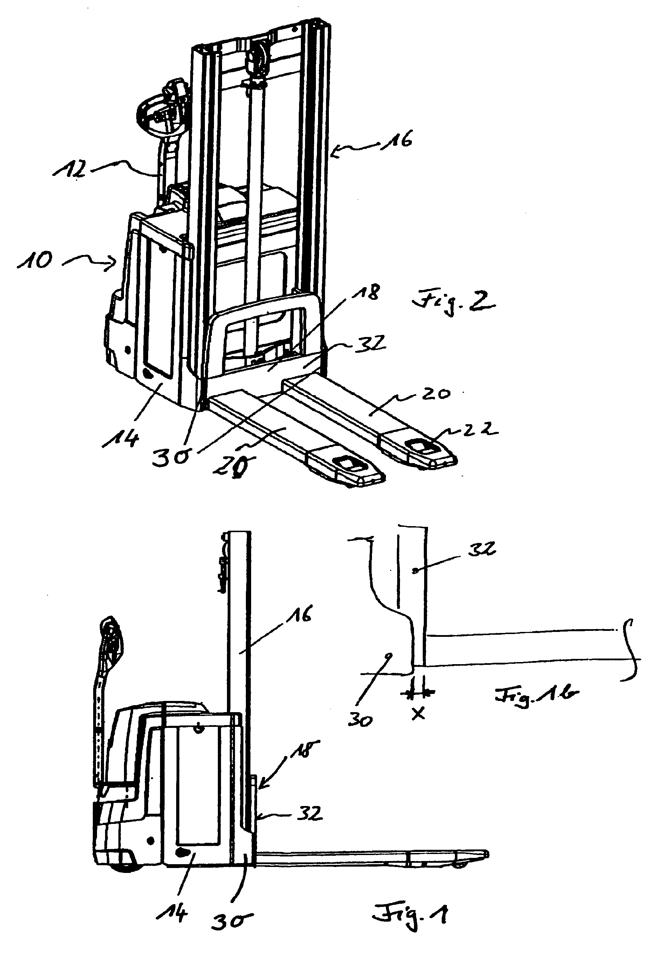

Fig. 1 zeigt einen Elektro-Deichselhubwagen/-stapler in einer perspektivischen Ansicht von vorne. Das Fahrzeug besitzt einen Fahrzeugkörper 10, der mit der Deichsel 12 geführt wird. An dem Fahrzeugkörper angebracht ist ein Lastrahmen 14, der mit einem Hubgerüst 16 verbunden ist. Das Hubgerüst 16 ist nicht notwendigerweise ausschließlich mit dem Lastrahmen 14 an dem Fahrzeugkörper verbunden, sondern kann auch zusätzlich noch an weiteren Stellen mit dem Fahrzeugkörper verbunden sein. Das Hubgerüst 16 trägt vom Fahrer abgewandt einen Lastschlitten 18, an dem zwei Lastarme 20 angebunden sind. Die Lastarme 20 besitzen im Bereich ihrer vom Fahrzeugkörper fortweisenden Spitze eine Durchbrechung 22.

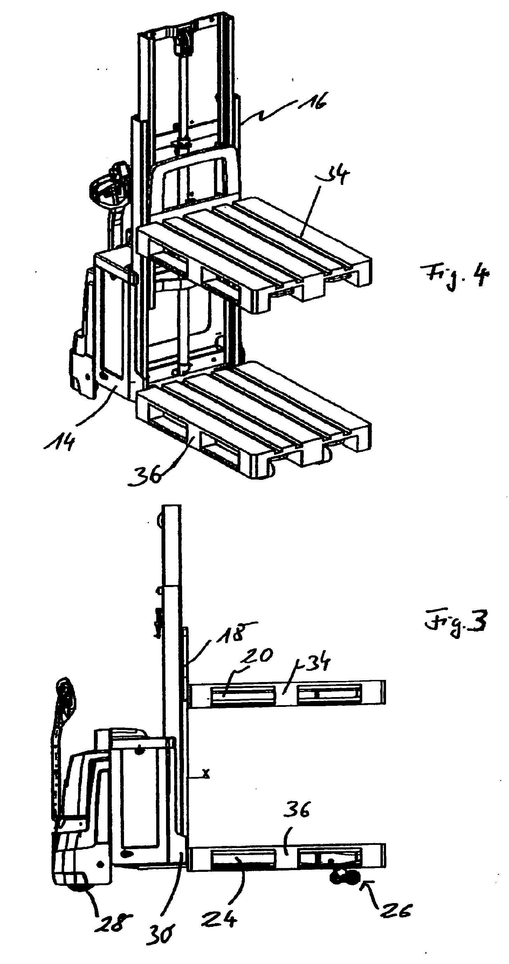

Wie mit Bezug auf Figur 4 deutlich wird, besitzt das Flurförderzeug zusätzlich Radarme 24, die an dem von dem Fahrzeugkörper fortweisenden Ende jeweils ein Radpaar 26 tragen. Gemeinsam mit dem Betriebsrad 28 wird das Flurförderzeug auf diese Weise abgestützt.

Wie in Fig. 1 zu erkennen, besitzt der Lastrahmen 14 seitlich zwei Anschläge 30 für Paletten. Die Anschläge 30 stehen seitlich aus dem Lastrahmen 14 vor und bilden damit seitlich eine Begrenzung für eine auf die Radarme aufgenommene Last. Die Palettenanschläge 30 erstrecken sich in der Höhe von der Unterseite des Radarms 24 ungefähr bis zur dreifachen Höhe des Radarms.

Wie in Fig. 1b und Fig. 2 zu erkennen, stehen die seitlichen Anschläge 30 geringfügig gegenüber der Frontplatte 32 des Lastschlittens zurück. Auf diese Weise wird sichergestellt, dass eine auf den Lastschlitten mit seinen Lastarmen 20 aufgenommene Palette 34 (vgl. Fig. 3 und 4) an der Frontplatte 32 ausgerichtet wird. Ist der Lastschlitten angehoben, so wird eine zweite Palette 36, die auf die Radarme aufgenommen ist, an den seitlichen Anschlägen 30 ausgerichtet. Indem der Abstand zwischen der vorstehenden Frontplatte 32 und den seitlichen Anschlägen 30 gering ist, kann sichergestellt werden, dass eine auf die Lastgabeln aufgenommene Palette 34 sich an der Frontplatte ausrichtet, während eine auf die Radarme aufgenommene Palette 36 sich an den seitlichen Anschlägen 30 ausrichtet. Die unabhängige Ausrichtung der Paletten für den Nieder- und Hochhubbetrieb stellt sicher, dass die Paletten 34 und 36 bei einem nachfolgenden Absetzen fast genau übereinander positioniert sind. Der Abstand, um den die Frontplatte 32 des Lastschlittens vorsteht gegenüber dem Abstand des Anschlags 30, fällt beim Absetzen der Paletten 34 und 36 nicht ins Gewicht.

## Patentansprüche

1. Flurförderzeug mit einem Paar von Radarmen zum Aufnehmen der ersten Palette (36) und mit einem Hubgerüst (16), an dem ein Lastschlitten (18) verfahrbar angeordnet ist, wobei das Hubgerüst (16) über einen Lastrahmen (14) mit einem Fahrzeugkörper verbunden ist und wobei der Lastrahmen (14) zwei Anschläge (30) für eine auf die Radarme (24) aufgenommene Last (36) aufweist, die jeweils auf einer Seite des Lastschlittens (18) an dem Lastrahmen (14) angeordnet sind und von dem Lastrahmen in Richtung der Radarme (24) vorstehen, **dadurch gekennzeichnet, dass** die Anschläge (30) eine seitliche Begrenzung für auf den Radarmen aufgenommene Last bilden.

2. Flurkrderzeug nach Anspruch 1, **dadurch gekennzeichnet, dass** die Anschläge (30) einen vorbestimmten Abstand zueinander aufweisen und jeweils einen gleichen Abstand zu den benachbarten Radarmen (24) aufweisen.

3. Flurförderzeug nach Anspruch 1 oder 2, **dadurch gekennzeichnet, dass** die Anschläge jeweils eine Anschlagfläche aufweisen, die einen spitzen Winkel mit der Längsachse des Radarms einschließt.

4. Flurförderzeug nach Anspruch 3, **dadurch gekennzeichnet, dass** der Lastrahmen Seitenwände aufweist, die das Hubgerüst (16) seitlich überdecken und deren zu den Radarmen (24) weisendes Ende jeweils einen Anschlag (30) trägt.

5. Flurförderzeug nach Anspruch 4, **dadurch gekennzeichnet, dass** eine zu den Lastarmen weisende Frontplatte (32) des Lastschlittens (18) eine Anschlag-fläche für eine aufzunehmende Last (34) der Lastarme (20) bildet, wobei die Frontplatte (32) um einen vorbestimmten Abstand vor den Anschlägen (30) steht.

6. Flurförderzeug nach einem der Ansprüche 1 - 5, **dadurch gekennzeichnet, dass** die Lastarme (20) ein U-Profil aufweisen und im abgesenkten Zustand des Lastschlittens (18) die Radarme mindestens teilweise in das U-Profil eintauchen.

## Claims

1. An industrial truck with a pair of wheel arms for picking up the first pallet (36) and with a lifting frame (16), on which a load sledge (18) is movably arranged, wherein the lifting frame (16) is connected to a vehicle body via a load frame (14) and wherein the load frame (14) has two stops (30) for a load (36) which is received on the wheel arms (24), each of the stops being arranged on the load frame (14) at one side of the load sledge (18) at a time and projecting from the load frame in the direction of the wheel arms (24), **characterised in that** the stops (30) form a lateral limit for a load which is picked up on the wheel arms.

2. The industrial truck according to claim 1, **characterised in that** the stops (30) have a predetermined distance from each other, each having the same distance to the neighbouring wheel arm (24).

3. An industrial truck according to claim 1 or 2, **characterised in that** each of the stops has a bearing surface which encloses an acute angle with the longitudinal axis of the wheel arm.

4. The industrial truck according to claim 3, **characterised in that** the load frame has side walls which laterally cover up the lifting frame (16) and each end of which, pointing towards the wheel arms (24), bears a stop (30).

5. The industrial truck according to claim 4, **characterised in that** a front board (32) of the load sledge (18) pointing towards the load arms forms a bearing surface for a load (34) of the load arms (20) that is to be picked up, wherein the front board (32) stands before the stops (30) in a predetermined distance.

6. An industrial truck according to any one of claims 1 to 5, **characterised in that** the load arms (20) have an U-profile, and that the wheel arms immerse at least partially into the U-profile in the lowered state of the load sledge (18).

## Revendications

1. Chariot de manutention avec une paire de bras de roue pour recevoir la première palette (36) et avec un cadre de levage (16) sur lequel un traîneau de charge (18) est arrangé de façon mobile, dans lequel le cadre de levage (16) est relié à un corps de véhicule à travers un cadre de charge (14) et dans lequel le cadre de charge (14) a deux butées (30) pour une charge (36) reçue sur les bras de roue (24), chacune des butées étant arrangée sur le cadre de charge (14) dans un côté du traîneau de charge (18) et projetant du cadre de charge dans la direction des bras de roue (24), **caractérisé en ce que** les butées (30) forment une limite pour une charge reçue sur le bras de roue.

2. Chariot de manutention selon la revendication 1, **caractérisé en ce que** les butées (30) ont une distance prédéterminée l'une de l'autre, chacune ayant une même distance aux bras de roue (24) avoisinants.

3. Chariot de manutention selon la revendication 1 ou 2, **caractérisé en ce que** chacune des butées a une surface d'arrêt qui inclut un angle aigu avec l'axe longitudinal du bras de roue.

4. Chariot de manutention selon la revendication 3, **caractérisé en ce que** le cadre de charge a des parois latérales qui latéralement recouvrent le cadre de levage (16) et dont l'extrémité montrant vers les bras de roue (24) porte une butée (30).

5. Chariot de manutention selon la revendication 4, **caractérisé en ce qu'**un panneau avant (32) du traîneau de charge (18) montrant vers les bras de charge forme une surface d'arrêt pour une charge (34) des bras de charge (20) qu'on veut recevoir, le panneau avant (32) faisant face avant les butées (30) dans une distance prédéterminée.

6. Chariot de manutention selon l'une quelconque des revendications 1 to 5, **caractérisé en ce que** les bras de charge (20) ont un profil en U, et que les bras de roue plongent au moins partiellement dans le profil en U dans l'état abaissé du traîneau de charge (18).
